# EUROPÄISCHE PATENTSCHRIFT

(11) **EP 0 666 161 B1**
(45) Veröffentlichungstag und Bekanntmachung des Hinweises auf die Patenterteilung: **16.05.2001**
(21) Anmeldenummer: 95100537.0
(22) Anmeldetag: 17.01.1995
(51) Int. Cl.: B29C 47/52, C08F 8/32

(54) **Verfahren zum Kurzzeitigen Behandeln einer Kunststoffschmelze mit einem flüssigen Behandlungsmittel und dabei hergestellter Kunststoff**
Method for short-term treatment of thermoplastic molten material with a fluid treating agent and obtained thermoplastic material
Procédé de traitement de coute durée de matière thermoplastique en fusion avec un agent de traitement et matière thermoplastique obtenué

(30) Priorität: 29.01.1994 DE 4402666
(43) Veröffentlichungstag der Anmeldung: 09.08.1995
(73) Patentinhaber: Röhm GmbH, 64293 Darmstadt (DE)
(72) Erfinder: Vetter, Heinz, Dr. Ing., D-64380 Rossdorf (DE); Höss, Werner, D-63150 Heusenstamm (DE); Dutschke, Joachim, Dr., D-64625 Bensheim (DE); Schikowsky, Hartmut, D-64283 Darmstadt (DE)

(56) Entgegenhaltungen:
- EP-A- 0 163 865
- EP-A- 0 216 505
- EP-A- 0 219 334
- EP-A- 0 234 074
- EP-A- 0 234 726
- EP-A- 0 340 873
- EP-A- 0 376 747
- EP-A- 0 463 759
- EP-A- 0 570 135
- GB-A- 2 101 139
- GB-A- 2 216 843
- US-A- 4 246 374
- US-A- 4 746 478
- RESEARCH DISCLOSURE, Nr. 321, 1.Januar 1991 Seite 68 A, B XP 000164449 'CONTROL OF FUNCTIONALITY IN GLUTARIMIDE POLYMERS'

## Beschreibung

Die Erfindung betrifft ein Verfahren zum kurzzeitigen Behandeln einer Kunststoffschmelze mit einem flüssigen Behandlungsmittel unter einem Druck und bei einer Temperatur, bei denen das Behandlungsmittel im flüssigen Zustand vorliegt, wobei die Mischung anschließend entspannt und einer Entgasung unter vermindertem Druck unterworfen wird. Die Erfindung betrifft weiterhin klare thermoplastische Kunststoffe, enthaltend einen Polymethacrylimid-Kunststoff oder daraus hergestellte klare Polymermischungen mit Polymethylmethacrylat.

### Stand der Technik

Ein Behandlungsverfahren der oben genannten Art wird zum Beispiel angewendet, um Polymethylmethacrylat in Polymethacrylimid-Kunststoffe umzuwandeln. Nach DE-C-2 652 118 wird Polymethylmethacrylat in einem Extruder aufgeschmolzen und in die Schmelze unter Druck Ammoniak oder ein primäres Amin eingepreßt. Diese Behandlungsmittel setzen sich mit den polymerisierten Einheiten des Methylmethacrylats zu cyclischen Glutarimid-Einheiten der Formel 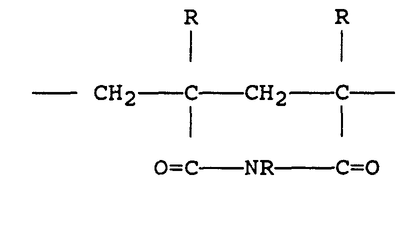 um, wobei R vorzugsweise ein Wasserstoffatom oder eine Methylgruppe darstellt. Dabei wird Methanol abgespalten, das in einer nachfolgenden Entgasungszone unter vermindertem Druck verdampft und aus dem Extruder abgezogen wird. Der Grad dieser als Imidierung bezeichneten Umsetzung richtet sich nach dem molaren Verhältnis des Ammoniaks oder Amins zu den gleichzeitig vorliegenden Einheiten des Methylmethacrylats. Mit einem Überschuß an Ammoniak oder Amin erreicht man eine weitgehende oder vollständige, mit unterstöchiometrischen Mengen eine teilweise Imidierung. Gleichzeitig entstehen Einheiten von Methacrylsäure bzw. Methacrylsäureanhydrid.

Aus der EP-A-216 505 ist bekannt, daß die teilimidierten Polymerisate untereinander und mit Polymethylmethacrylat nicht verträglich sind und trübe Mischungen ergeben. Auch unvermischte Polymethacrylimid-Kunststoffe sind manchmal trüb, was auf unverträgliche Polymerisatanteile hindeutet. In der EP-A-376 748 wird als Ursache für solche Trübungen eine Verteilungsbreite des Imidierungsgrades von mehr als 5 % angegeben. Klare Polymethacrylimid-Kunststoffe mit einer Verteilungsbreite unter 5 % werden dadurch erhalten, daß die Imidierung in einer Lösung von Polymethylmethacrylat in einem organischen Lösungsmittel, wie Toluol, durchgeführt wird. Es werden z.B. Imidierungsgrade von 75 bis 80 % erreicht. Der Nachteil dieses Verfahrens liegt darin, daß das Lösungsmittel nach der Umsetzung verdampft und vom abgespaltenen Methanol und nicht umgesetztem Amin getrennt werden muß.

Es gibt verschiedene Verfahren, bei denen Schmelzen von thermoplastischen Kunststoffen mit dünnflüssigen Behandlungsmitteln unter Druck vermischt werden. Gemäß DE--A-3 624 909 wird in eine Kunststoffschmelze ein flüssiges Treibmittel eingemischt, die Mischung gekühlt und durch Entspannung im thermoelastischen Zustand zu einem Schaumstoff expandiert. Zum Mischen der Bestandteile von höchst unterschiedlicher Viskosität wird eine besondere Mischvorrichtung verwendet, die an einen Extruder angeschlossen ist. Die Mischvorrichtung weist einen Rotor auf, der in einem Stator derart gelagert ist, daß ein Spalt für den Durchtritt des Gemisches aus Treibmittel und Thermoplasten während der Drehung des Rotors gebildet wird. Der Rotor weist an seiner Außenseite und der Stator an seiner Innenseite Höhlungen auf, die derart angeordnet sind, daß sie sich während der Drehung des Rotors gegenseitig überlappen und den Transfer des Gemisches aus Treibmittel und Thermoplasten zwischen den Höhlungen während des Durchtritts des Gemisches durch den Mischer veranlassen.

EP-A-163 865 beschreibt ein Verfahren zur Herstellung von Formkörpern aus vernetzbaren Polymeren. Dabei werden das Polymer, z. B. Polyethylen, und ein Vernetzungsmittel, z. B. ein Silanol, sehr schnell in einem Cavity-Transfer-Mix-Verfahren miteinander vermengt, so daß eine unerwünschte Gelbildung, die bei inhomogenen Mischungen auftreten kann, unterbleibt. Die Zugabe des Vernetzungsmittels erfolgt in einer Portion, worauf die Vernetzung des Polymeren im Extruder einsetzt und nach dem Austrag aus dem Extruder in Gegenwart heißen Wassers oder hoher Feuchtigkeit zu Ende geführt wird. Ein Entgasungsschritt ist nicht vorgesehen.

### Aufgabe und Lösung

Die Erfinder haben festgestellt, daß die Trübung von teilimidiertem Polymethylmethacrylat oder von dessen Mischungen mit unbehandeltem Polymethylmethacrylat auf Anteilen von höher imidiertem Material beruht, das mit dem schwächer oder gar nicht imidierten Material nicht verträglich ist und sich als getrennte Phase aus der Mischung abscheidet. Die Bildung höher imidierter Anteile bei der Umsetzung einer Polymethylmethacrylat-Schmelze mit Ammoniak oder einem Amin im Extruder beruht anscheinend auf der schnellen Umsetzung. Das in die Schmelze eingepreßte Ammoniak oder Amin reagiert schneller mit den in nächster Umgebung vorhandenen Methylmethacrylateinheiten, als es in der Schmelze verteilt wird. Die nachfolgende Durchmischung der Schmelze hat nur noch die Folge, daß die an der Einführungsstelle gebildeten hoch imidierten Anteile in dem wenig oder gar nicht umgesetzten Polymermaterial fein verteilt werden, aber als getrennte Phase bestehen bleiben und Lichtstreuung verursachen.

Ähnliche Probleme können bei der Entgasung von Restmonomeren aus thermoplastischen Kunststoffschmelzen auftreten. Eine erfolgreiche Methode zur Verminderung des Restmonomergehaltes in der Schmelze besteht darin, eine kleine Menge Wasser in die Schmelze einzubringen. Bei der anschließenden Entgasung verdampft das Wasser und führt die Monomerdämpfe mit sich. Bei der Entgasung von Polymethylmethacrylat und anderen Polymeren mit hydrolysierbaren Gruppen besteht jedoch die Gefahr, daß an der Einführungsstelle eine verhältnismäßig hohe Wasserkonzentration auftritt, die zur Hydrolyse führt. Es können unverträgliche, teilhydrolysierte Polymerisatanteile entstehen, die zu Trübung oder Korrosion Anlaß geben.

Der Erfindung liegt nun die Aufgabe zugrunde, die unerwünschte Ausbildung von Inhomogenitäten und Unverträglichkeiten beim kurzzeitigen Behandeln einer Kunststoffschmelze mit einem flüssigen Behandlungsmittel unter einem Druck und bei einer Temperatur, bei denen das Behandlungsmittel im flüssigen Zustand vorliegt, zurückzudrängen und die erwünschte Beeinflussung schnell und gleichmäßig vorzunehmen.

Die Aufgabe wird gelöst durch ein Verfahren zum kurzzeitigen Behandeln einer Kunststoffschmelze mit einem flüssigen Behandlungsmittel unter einem Druck und bei einer Temperatur, bei denen das Behandlungsmittel im flüssigen Zustand vorliegt, wobei Kunststoffschmelze in einem Extruder unter Druck gesetzt und in eine Mischvorrichtung eingeleitet wird, die einen Stator und einen Rotor enthält und das Behandlungsmittel unter einem mindestens gleichgroßen Druck in die Mischvorrichtung eingeleitet wird, wobei der Stator an seiner Innenseite und der Rotor an seiner Außenseite Höhlungen zur Aufnahme abgegrenzter Teilmengen der Kunststoffschmelze aufweisen, die sich während der Rotation des Rotors in dem Stator in der Weise kurzzeitig überlappen, daß unter dem herrschenden Druck Anteile der Teilmengen der mit dem Behandlungsmittel vermischten Schmelze aus jeder Höhlung abgetrennt und zwischen den Höhlungen des Rotors und des Stators ausgetauscht werden, und die abgetrennten Anteile jeweils in weiter strömungsabwärts gelegene Höhlungen übertreten und wobei die Kunststoffschmelze in abgegrenzte Teilmengen zerteilt wird, einzelne Teilmengen mit dem Behandlungsmittel in Berührung gebracht und innerhalb einer Verweilzeit von weniger als einer Sekunde mit Anteilen wenigstens einer anderen Teilmenge vereinigt werden, von der entstandenen Mischung Anteile abgetrennt und mit einer anderen Teilmenge vereinigt werden und die Vorgänge des Abtrennens und Vereinigens mehrfach in Zeitabständen von weniger als einer Sekunde bis zur Bildung einer innigen Mischung der Kunststoffschmelze mit dem Behandlungsmittel wiederholt werden und anschließend die Mischung entspannt dadurch gekennzeichnet, daß die Mischung einer Entgasung unter vermindertem Druck unterworfen wird.

Durch das mehrfache Zerteilen in kleine Mengenanteile und Vereinigen von Teilmengen wird das Behandlungsmittel so schnell in der Schmelze verteilt, daß ein ausreichend homogenes Behandlungsprodukt entsteht. Natürlich bleibt die mechanische Verteilung der Schmelze noch weit entfernt von dem molekularen Verteilungszustand, wie er gemäß EP-A-376 748 bei einer Polymerisatlösung erreicht wird. Es ist daher als überraschend anzusehen, daß die mechanische Zerteilung und Vereinigung einen gleichwertigen Erfolg erreichen läßt.

### Anwendung der Erfindung

Obwohl sich das Verfahren der Erfindung auf viele verschiedenanrtige Behandlungsverfahren anwenden läßt, hat es in den Fällen besondere Bedeutung, in denen das Behandlungsmittel selbst oder ein bei der Behandlung freigesetztes Folgeprodukt flüchtig sind und bei der anschließenden Entgasung abgezogen werden können. Auch dünnflüssige Behandlungsmittel, die sonst nur schwer in eine Kunststoffschmelze eingearbeitet werden können, lassen sich nach dem Verfahren der Erfindung verarbeiten. Das Behandlungsmittel soll bei den angewandten Druck- und Temperaturbedingungen flüssig oder allenfalls im überkritischen Zustandsbereich vorliegen.

Das Behandlungsmittel kann gegenüber dem Kunststoff reaktionsfähig sein. Ein wichtiges Anwendungsbeispiel ist die teilweise Umsetzung von Polymethylmethacrylat mit Ammoniak oder Aminen zu Methylmethacrylat-Methacrylimid-Copolymerisaten. Der Fall einer unerwünschten Reaktionsfähigkeit des Behandlungsmittels liegt bei der Schleppmittelentgasung, d.h. der Restmonomerentfernung mittels Wasser aus Polymethylmethacrylat oder anderen Polymerisaten mit Carbonsäureestergruppen vor.

### Ausführung der Erfindung

Das Verfahren der Erfindung wird vorzugsweise in der Weise ausgeführt, daß die Kunststoffschmelze in einem Extruder unter Druck gesetzt und in eine Mischvorrichtung eingeleitet wird, die einen Stator und einen Rotor aufweist. Zwischen diesen befindet sich ein enger Spalt. Das Behandlungsmittel wird unter einem mindestens gleichgroßen Druck in die Mischvorrichtung eingeleitet. Der Stator weist an seiner Innenseite und der Rotor an seiner Außenseite Höhlungen zur Aufnahme abgegrenzter Teilmengen der Kunststoffschmelze auf. Während der Rotation des Rotors in dem Stator überlappen sich die Höhlungen des Stators und des Rotors kurzzeitig in der Weise, daß unter dem herrschenden Druck Anteile der Teilmengen der mit dem Behandlungsmittel vermischten Schmelze aus jeder Höhlung abgetrennt und zwischen den Höhlungen des Rotors und des Stators ausgetauscht werden, wobei die abgetrennten Anteile jeweils in weiter strömungsabwärts gelegene Höhlungen übertreten. In der jeweiligen Überlappungsphase dringt also jeweils ein Anteil der Teilmenge aus einer Höhlung des Rotors in eine strömungsabwärts gelegene Höhlung des Stators ein, während gleichzeitig am anderen Ende dieser Höhlung eine gleichgroßer Schmelzeanteil in eine Höhlung des Rotors übertritt. Beim Fortschreiten der Rotation endet der Schmelzeübertritt mit dem Verschwinden der Überlappung und setzt erneut ein, sobald mit der nächsten Höhlung in Rotationsrichtung eine neue Überlappungsphase beginnt. Sofern sich zwischen dem Rotor und dem Stator jeweils eine Höhlung der einen Seite mit mehreren Höhlungen der anderen Seite überlappen können, tritt eine weitere Verzweigung der Schmelzeströmung ein.

Mischer dieser Arbeitsweise werden englisch als "cavity transfer mixer" bezeichnet, die schon in den britischen Patentschriften GB-A-930 339 und GB-A-1 475 216 dargestellt sind. Weiterentwicklungen sind in DE-C-3 806 147 und DE-C-3 819 605 beschrieben. Eine genaue Beschreibung ihrer Wirkungsweise findet sich in der US-A-4 419 014. Eingehende Untersuchungen der Mischwirkung wurden von F. Hensen (Intern. Polymer Processing IV, 1989, 2), M. Gale, K. Storton, E. de Jong, D. South, S. Dominey, R. Hindmarch (Informationsschrift der Rapra Technology Ltd., Shawbury, Shrewsbury, Shropshire SY4 4NR, UK, vom 15. Nov. 1988) veröffentlicht. Sie werden vorwiegend zum Vermischen von thermoplastischen Kunststoffen untereinander oder mit Kautschuken, aber auch mit anderen Additiven wie Pigmenten, Füllstoffen, Gleitmitteln, Stabilisatoren oder Antistatika, eingesetzt. In jedem Fall dienten die Mischverfahren zum effektiven Einarbeiten dauerhafter Mischungsbestandteile. Dagegen war es bisher nicht bekannt, mit derartigen Mischern dünnflüssige Behandlungsmittel einzuarbeiten, die selbst oder deren Umsetzungsprodukte anschließend durch Entgasung wieder entfernt werden.

Die Verweilzeit, während der eine einzelne Teilmenge der Mischung aus der Schmelze und dem Behandlungsmittel in einer Höhlung des Mischers zwischen zwei Abtrennungs- und Vereinigungsvorgängen bestehen bleibt, liegt in der Regel weit unter 1 Sekunde, vorzugsweise im Bereich von 0,01 bis 0,1 Sekunden. Nach dieser Verweilzeit haben sich die Höhlungen des Rotors so gegenüber denen des Stators verschoben, daß eine neue Überlappungsphase entstanden ist. Daher dringt unter dem herrschenden Druck die Mischung aus den Höhlungen der einen Wandung in die strömungsabwärts gelegenen Höhlungen auf der anderen Seite ein und verdrängt einen Anteil der dort befindlichen Mischung in strömungsabwärts gelegene Höhlungen der gegenüberliegenden Seite. Die Höhlungen sind im Stator und im Rotor meist in Reihen entlang einer Umfangslinie angeordnet. In jeder Überlappungsphase tritt die Mischung in eine weiter strömungsabwärts gelegene Reihe ein, bis die Mischung am Ende des Mischers aus der letzten Höhlungsreihe austritt. Als Verweilzeit wird die Zeitspanne zwischen zwei Überlappungsphasen gerechnet, unabhängig davon, wie groß der übergetretene Anteil an den Teilmengen in den Höhlungen ist. Der Wechsel von Zerteilen und Vereinigen wiederholt sich so oft, bis die Mischung ganz durch den Mischer hindurchgeströmt ist. Wenn der Stator und der Rotor jeweils Y Reihen mit N Höhlungen enthalten, wird ein in den Mischer eintretender Materialstrom bis zu seinem Austritt N^{2Y} mal zerteilt (F. Hensen). Die Verweilzeit zwischen zwei aufeinanderfolgenden Zerteilungsvorgängen ergibt sich aus dem Quotienten aus der Verweilzeit im Mischer und der Zahl der Zerteilungsvorgänge; sie liegt in der Regel weit unter 1/1000 Sekunde.

Die Größe der Teilmengen wird durch das Volumen der Höhlungen bestimmt. Sie müssen so klein sein, daß das Behandlungsmittel jede Teilmenge ausreichend stark durchdringen und im gewünschten Sinne beeinflussen kann. Teilmengen von 0,05 bis 10 ml haben sich im allgemeinen als hinreichend klein erwiesen.

Der Druck am Eingang des Mischers wird in der Regel durch die davor endende Extruderschnecke erzeugt und liegt beispielsweise im Bereich von 10 bis 250 bar. Zweckmäßig ist der Rotor des Mischers an die Achse der Extruderschnecke mechanisch angekoppelt und wird von dieser angetrieben. Das Behandlungsmittel wird unter wenigstens dem gleichen, vorzugsweise einem etwas höheren Druck am Beginn des Mischers, etwa durch Öffnungen in einer oder mehreren Höhlungen der ersten Höhlungsreihe, eingepreßt. Der Druckabfall bis zum Ausgang des Mischers beträgt in der Regel 5 bis 50 bar, so daß die Mischung mit einem Druck von 5 bis 200 bar aus dem Mischer austritt. Es ist vorteilhaft, diesen Druck während des kontinuierlichen Betriebs möglichst konstant zu halten. Dies geschieht zweckmäßig dadurch, daß die Mischung über ein geregeltes Druckhalteventil in den Entgasungsbereich geleitet wird. Als Regelgröße dient der Druck vor dem Eintritt in den Mischer; beim Anstieg dieses Druckes wird das Druckhalteventil weiter geöffnet und umgekehrt.

Die Entgasung der Mischung erfolgt nach einer wählbaren Verweilzeit, die durch die Strömungszeit vom Austritt aus dem Mischer bis zum Eintritt in die Entgasungszone bestimmt wird. Während dieser Zeit besteht die Gefahr der ungleichförmigen Veränderung der Mischung nicht mehr. Die Verweilzeit kann so lang eingestellt werden, bis die gewünschte gleichförmige Umsetzung eingetreten ist, oder so kurz gehalten werden, daß unerwünschte Veränderungen vermieden werden.

Zur Entgasung eignet sich ein üblicher Entgasungsextruder, in welchem die Mischung in eine Zone verminderten Druckes gefördert wird. Obwohl dieser Entgasungsextruder unmittelbar an den Mischer angeschlossen und von der gleichen Achse angetrieben werden kann, ist es zum Zwecke einer genaueren Druckregelung im Mischer vorteilhafter, den Entgasungsextruder von dem Mischer zu trennen und die Mischung von diesem über eine Leitung mit dem erwähnten Druckhalteventil in den Entgasungsextruder einzuleiten. Dort wird eine Temperatur im Schmelzebereich aufrechterhalten, die meist mit der im Mischer etwa übereinstimmt. Der Druck der Entgasungszone richtet sich nach dem Dampfdruck des zu entgasenden Bestandteils. Manchmal genügt es, den Druck gegenüber dem im Mischer nur teilweise abzusenken. Vorzugsweise erfolgt die Entgasung bei atmosphärischem oder unteratmosphärischem Druck, gegebenenfalls in mehreren absteigenden Druckstufen bis zu einem Enddruck im Bereich von 400 bis 10 mbar. Aus der Entgasungszone werden die Dämpfe in üblicher Weise abgezogen. Die Schmelze wird anschließend in einer Pumpzone wieder auf erhöhten Druck gebracht und über eine Düse ausgetragen und gekühlt. Gewünschtenfalls können in der Pumpzone weitere Kunststoffe oder sonstige Zusätze eingemischt werden.

Eine Vielzahl von thermoplastischen Kunststoff kann nach dem Verfahren der Erfindung behandelt werden. Bevorzugt sind Kunststoffe, die bei Schmelzetemperaturen von 180 bis 320°C verarbeitbar sind und in diesem Temperaturbereich eine Schmelzviskosität von 1000 bis 15 000 Pa s haben. Besonders bevorzugt ist Polymethylmethacrylat. Darunter werden nicht nur Homopolymerisate des Methylmethacrylats verstanden, sondern auch dessen Copolymerisate mit niederen Alkylacrylaten, Styrol, Maleinsäureanhydrid sowie Mischungen solcher Polymerisate mit anderen Kunststoffen.

Die erhöhte Homogenität der erfindungsgemäß behandelten Kunststoffe fördert nicht nur deren innere Verträglichkeit sondern auch ihre Mischbarkeit mit anderen thermoplastischen Kunststoffen. Dies wirkt sich bei der Teilimidierung von Polymethylmethacrylat besonders vorteilhaft aus. Durch Umsetzung mit 0,01 bis 0,1 Mol Ammoniak oder eines primären Amins je Grundmol der Methylmethacrylateinheiten erhält man Methylmethacrylat-Methacrylimid-Copolymerisate mit einem Imidierungsgrad von 0,5 bis 15 %. Bevorzugt sind primäre aliphatische Amine mit 1 bis 6 C-Atomen, insbesondere Methylamin. Sie werden zweckmäßig in Form einer 10- bis 60-gewichtsprozentigen wäßrigen Lösung eingesetzt, deren Wasseranteil sich bei der Entgasung vorteilhaft auf die Entfernung von Restmonomeren und anderen flüchtigen Bestandteilen auswirkt. Bevorzugte thermoplastische Kunststoffe, die gemäß der Erfindung herstellbar sind, haben die Mischpolymerisat-Zusammensetzung:
1 - 15 Gew.-% Glutarimid-Einheiten,
1 - 6 Gew.-% Methacrylsäure-Einheiten,
0,5-10 Gew.-% Methacrylsäureanhydrid-Einheiten
und zum verbleibenden Teil im wesentlichen
Methylmethacrylat-Einheiten.

Unter Glutarimid-Einheiten werden die eingangs formelmäßig dargestellten Dimethacrylimidgruppen verstanden, in denen R ein Wasserstoffatom oder eine niedere Alkylgruppe, insbesondere mit 1 bis 4 C-Atomen, vorzugsweise Methyl, verstanden. Die Vicat-Erweichungstemperaturen der Umsetzungsprodukte liegen bei 110 bis 130°C. Sie zeichnen sich durch hohe Klarheit aus, meßbar durch einen besonders niedrigen Trübungswert (Haze nach ASTM D 1003), die überraschenderweise auch beim Abmischen mit Polymethylmethacrylat-Formmassen nicht verloren geht. Bevorzugt sind Polymermischungen aus
A) 10 bis 90 Gew.-% (bezogen auf den Kunststoff) eines Mischpolymerisats aus 80 bis 99 Gew.-% (bezogen auf das Mischpolymerisat) Methylmethacrylateinheiten und 1 bis 15 Gew.-% Glutarimid-Einheiten und
B) 90 bis 10 Gew.-% Polymethylmethacrylat.

Derartige Mischungen haben Vicat-Erweichungstemperaturen von 110 bis 130°C. Sie eignen sich für viele Verwendungszwecke, für die bisher überwiegend Polymethylmethacrylat eingesetzt wurde, z.B. Leuchtenabdeckungen für Kraftfahrzeuge, haben jedoch bei unverändert guten Witterungseigenschaften den Vorteil einer höheren thermischen Belastbarkeit.

### Beispiel 1

Es wird eine Behandlungsvorrichtung verwendet, die aus einem Reaktionsextruder, einem nachgeschalteten Druckhalteventil und einem Entgasungsextruder mit zwei Entgasungsöffnungen, die an eine 40 mbar-Vakuumleitung angeschlossen sind, besteht. Der Reaktionsextruder hat einen Schneckendurchmesser D = 45 mm und enthält ein Mischteil von 45 mm Durchmesser und 5 D Länge mit einem Stator und einem Rotor, worin Reihen von halbkugelförmigen Vertiefungen mit 6 mm Durchmesser entlang von Umfangslinien angeordnet sind. Die Reihen sind in Längsrichtung in der Weise gegeneinander versetzt, daß sie sich wechselweise zwischen Stator und Rotor teilweise überlappen.

Je Stunde werden 10 kg einer PMMA-Formmasse (mit 1 Gew.-% Methylacrylateinheiten) eingebracht. Am Beginn des Mischteils werden bei 250°C und 100 bar mittels einer Dosierpumpe pro Stunde 10 g Methylamin in die Schmelze eingepreßt. Das Reaktionsgemisch wird an dem Druckhalteventil entspannt und in den Entgasungsextruder eingeführt. Er hat einen Schneckendurchmesser D = 30 mm und eine Länge von 30 D. Die am Ende des Entgasungsextruders ausgetragene Formmasse ist glasklar. Durch NMR-Analyse wurde ein Gehalt von 7,7 Gew.-% Dimethacryl-N-methylimideinheiten festgestellt. Aus der Formmasse wurden Probekörper gespritzt, an denen eine Vicat-Erweichungstemperatur von 120°C und eine Trübung (Haze, 23°C) von 0,6 % gemessen wurde.

### Beispiel 2

Das Verfahren gemäß Beispiel 1 wird mit einer Formmasse aus reinem Polymethylmethacrylat wiederholt. Es werden pro kg Formmasse 5 g einer 40 %igen wäßrigen Methylaminlösung zugegeben.

Die erhaltene Formmasse enthält 5,3 Gew.-% Dimethacryl-N-methylimideinheiten und hat eine Vicat-Erweichungstemperatur von 125°C. Durch GC-Analyse wurde ein Restmonomergehalt von 100 ppm MMA gefunden.

### Beispiel 3

Die gemäß Beispiel 2 erzeugte Formmasse wird auf einem Einschneckenextruder im von Verhältnis 50 : 50 Gew.-Tln. mit einer PMMA-Formmasse (mit 1 Gew.-% Methylacrylateinheiten) compoundiert. Aus der Mischung wurden zur Bestimmung der optischen Eigenschaften Probekörper mit 50 mm Durchmesser und einer Dicke von 4 mm spritzgegossen. Die Transmission betrug 91,6 %, die Trübung (Haze, 23°C) 0,9 %. Die mittels DSC durchgeführte Bestimmung der Glasübergangsstufen ergab nur eine Stufe bei 125°C.

### Beispiel 4

Die gemäß Beispiel 1 erzeugte Formmasse wurde mit einer solchen Menge eines nach DE-C-3 842 796 hergestellten Schlagzäh-Modifizierungsmittels (Emulsionspolymerisat mit butylacrylathaltigem Kern und PMMA-Schale) auf einem Einschneckenextruder compoundiert, daß eine Formmasse mit 14 Gew.-% an polymerisiertem Butylacrylat erhalten wurde. Daraus wurden Probekörper zur Bestimmung der Kerbschlagzähigkeit, der Wärmeformbeständigkeit und der optischen Eigenschaften spritzgegossen.
Kerbschlagzähigkeit (ISO 180/1A) bei 23°C: 7,2 kJ/m²
Vicat-Erweichungstemperatur (VST/B50): 108°C
Lichttransmission 90,2 %
Trübung (Haze, 23°C) 1,9 %.

### Beispiel 5 - Vergleichsversuch

In dem in Beispiel 1 beschriebenen Reaktionsextruder wurde der Stator des Mischteils durch ein glattes Hohlzylinderstück ohne Höhlungen und der Rotor durch ein Schneckenteil von 45 mm Durchmesser ersetzt; beide Teile hatten eine Länge von 5 D. Das Schneckenteil war zweigängig ausgebildet und die Schneckengänge waren derartig bearbeitet, daß je 1 D Steigung 8 Stifte erhalten wurden. Mit der so veränderten Vorrichtung wurde das Verfahren gemäß Beispiel 1 unter gleichen Bedingungen wiederholt. Das Methylamin wurde im Meteringbereich des Reaktionsextruders eingeführt.

Nach Umsetzung und Entgasung wie im Beispiel 1 wurde eine Formmasse erhalten, aus der Probekörper gespritzt wurden. Daran wurde eine Trübung (Haze, 23°C) von 18 % ermittelt.

Sequenzanalyse der Beispiele 1 und 5 nach der ¹³C-Markierungsmethode und der Signalzuordnungsmethode nach E. Klesper, Pol.Bul. 2, 691 (1980): Das Produkt von Beispiel 1 ergab intensivere Methylsignale, woraus qualitativ auf eine geringere Blockbildung der Glutarimid-Einheiten als beim Produkt von Beispiel 5 geschlossen werden kann. Die stärkere Blockstruktur des letzteren führt wegen der bekannten Unverträglichkeit von PMMA- und PMMI-Molekülen zu Trübung.

## Patentansprüche

1. Verfahren zum kurzzeitigen Behandeln einer Kunststoffschmelze mit einem flüssigen Behandlungsmittel unter einem Druck und bei einer Temperatur, bei denen das Behandlungsmittel im flüssigen Zustand vorliegt, wobei Kunststoffschmelze in einem Extruder unter Druck gesetzt und in eine Mischvorrichtung eingeleitet wird, die einen Stator und einen Rotor enthält und das Behandlungsmittel unter einem mindestens gleichgroßen Druck in die Mischvorrichtung eingeleitet wird, wobei der Stator an seiner Innenseite und der Rotor an seiner Außenseite Höhlungen zur Aufnahme abgegrenzter Teilmengen der Kunststoffschmelze aufweisen, die sich während der Rotation des Rotors in dem Stator in der Weise kurzzeitig überlappen, daß unter dem herrschenden Druck Anteile der Teilmengen der mit dem Behandlungsmittel vermischten Schmelze aus jeder Höhlung abgetrennt und zwischen den Höhlungen des Rotors und des Stators ausgetauscht werden, und die abgetrennten Anteile jeweils in weiter strömungsabwärts gelegene Höhlungen übertreten und wobei die Kunststoffschmelze in abgegrenzte Teilmengen zerteilt wird, einzelne Teilmengen mit dem Behandlungsmittel in Berührung gebracht und innerhalb einer Verweilzeit von weniger als einer Sekunde mit Anteilen wenigstens einer anderen Teilmenge vereinigt werden, von der entstandenen Mischung Anteile abgetrennt und mit einer anderen Teilmenge vereinigt werden und die Vorgänge des Abtrennens und Vereinigens mehrfach in Zeitabständen von weniger als einer Sekunde bis zur Bildung einer innigen Mischung der Kunststoffschmelze mit dem Behandlungsmittel wiederholt werden und anschließend die Mischung entspannt dadurch gekennzeichnet, daß die Mischung einer Entgasung unter vermindertem Druck unterworfen wird.

2. Verfahren nach Anspruch 1, dadurch gekennzeichnet, daß der in die Mischvorrichtung eintretende Schmelzestrom bis zu seinem Austritt N^{2Y} Teilungs- und Vereinigungsvorgängen unterworfen wird, wobei N die Zahl der Höhlungen in einer Umfangslinie des Rotors oder Stators und Y die Zahl der Reihen von Höhlungen im Rotor oder Stator ist.

3. Verfahren nach Anspruch 2, dadurch gekennzeichnet, daß die Kunststoffschmelze durch den Eintritt in die Höhlungen in dem Stator und dem Rotor in Teilmengen von jeweils 0,05 bis 10 ml zerteilt werden.

4. Verfahren nach einem oder mehreren der Ansprüche 1 bis 3, dadurch gekennzeichnet, daß der Rotor durch Ankopplung an die Extruderschnecke angetrieben wird.

5. Verfahren nach einem oder mehreren der Ansprüche 1 bis 4, dadurch gekennzeichnet, daß die Mischung aus der Schmelze und dem Behandlungsmittel nach dem Austritt aus der Mischvorrichtung über ein Druckhalteventil, das in der Mischvorrichtung einen konstanten Druck von 50 bis 400 bar aufrechthält, in einen Entgasungsextruder eingeleitet und entgast wird.

6. Verfahren nach einem oder mehreren der Ansprüche 1 bis 5, dadurch gekennzeichnet, daß ein Behandlungsmittel verwendet wird, das gegenüber dem Kunststoff reaktionsfähig ist.

7. Verfahren nach einem oder mehreren der Ansprüche 1 bis 6, dadurch gekennzeichnet, daß als Kunststoff ein Polymer mit seitenständigen Carbonsäureestergruppen verarbeitet wird.

8. Verfahren nach einem oder mehreren der Ansprüche 1 bis 7, dadurch gekennzeichnet, daß das Behandlungsmittel Wasser enthält.

9. Verfahren nach einem oder mehreren der Ansprüche 1 bis 8, dadurch gekennzeichnet, daß als Kunststoff Polymethylmethacrylat und als Behandlungsmittel ein primäres Amin oder Ammoniak eingesetzt werden.

10. Verfahren nach Anspruch 1 bis 9, dadurch gekennzeichnet, daß das Amin in einer Menge von 0,01 bis 0,1 Mol je Grundmol der Methylmethacrylateinheiten eingesetzt wird.

11. Verfahren nach Anspruch 9 oder 10, dadurch gekennzeichnet, daß das Amin in Form einer 10- bis 60-gewichtsprozentigen wäßrigen Lösung eingesetzt wird.

12. Klarer thermoplastischer Kunststoff, enthaltend ein Mischpolymerisat aus
1 - 15 Gew.-% Glutarimid-Einheiten,
1 - 6 Gew.-% Methacrylsäure-Einheiten,
0,5 - 10 Gew.-% Methacrylsäureanhydrid-Einheiten-Einheiten
und zum verbleibenden Teil im wesentlichen Methylmethacrylat-Einheiten dadurch gekennzeichnet, daß er nach einem Verfahren gemäß einem oder mehreren der Ansprüche 1 bis 11 herstellbar ist und eine Trübung (Haze-Wert, 23 °C) unter 2 % aufweist.

13. Verwendung des Kunststoffs gemäß Anspruch 12 in einer Polymermischung mit 90 bis 10 Gew.-% Polymethylmethacrylat.

14. Verwendung gemäß Anspruch 13, wobei das Polymethylmethacrylat ein schlagzäh modifiziertes Polymethylmethacrylat ist

## Claims

1. A process for quick treatment of a plastic melt with a fluid treatment agent under a pressure and at a temperature where the treatment agent is present in a fluid state, wherein plastic melt in an extruder is subjected to a pressure and fed into a mixing apparatus which contains a rotor and a stator and the treatment agent is introduced into the mixing apparatus under at least the same degree of pressure , wherein the stator has cavities in its inside and the rotor has cavities on its outside to receive separated partial quantities of the plastic melt which briefly overlap during rotation of the rotor in the stator in such a manner that under the ambient pressure, proportions of the partial quantities of the melt mixed with treatment agent are separated from each cavity and exchanged between the rotor and stator cavities, and the separated proportions cross over into cavities disposed further downstream, and wherein the plastic melt is divided into separate partial quantities, individual partial quantities are brought into contact with the treatment agent and are joined with at least one other partial quantity within a duration of less than a second, proportions of the resultant mixture being separated off and joined with another partial quantity and the process of separating and joining being repeated a plurality of times at intervals of less than a second until an intimate mixture of plastic melt with the treatment agent is formed, and then the mixture is relaxed, characterised in that the mixture is subjected to degassing at reduced pressure.

2. A process according to claim 1, characterised in that the stream of melt entering the mixing apparatus is subjected to N^{2Y} separation and joining processes until its exit, wherein N is the number of cavities in a peripheral line of the rotor or stator and Y is the number of rows of cavities in the rotor or stator.

3. A process according to claim 2, characterised in that the plastic melt is divided by the entry into the cavities in the stator and rotor into partial quantities of 0.05 to 10 ml.

4. A process according to one or more of claims 1 to 3, characterised in that the rotor is driven by being coupled to the barrel extruder.

5. A process according to one or more of claims 1 to 4, characterised in that after exiting from the mixing apparatus via a pressure-maintaining valve, which maintains a constant pressure of 50 to 400 bar in the mixing apparatus, the mixture of the melt and the treatment agent is fed into a degassing extruder and de-gassed.

6. A process according to one or more of claims 1 to 5, characterised in that a treatment agent is used which is reactive in comparison with the plastic.

7. A process according to one or more of claims 1 to 6, characterised in that as a plastic, a polymer with lateral carboxylic acid ester groups is processed.

8. A process according to one or more of claims 1 to 7, characterised in that the treatment agent contains water.

9. A process according to one or more of claims 1 to 8, characterised in that polymethylmethacrylate is used as a plastic and a primary amine or ammonia is used as a treatment agent.

10. A process according to one or more of claims 1 to 9, characterised in that the amine is used in a quantity of 0.01 to 0.1 mol per base mol of the methylmethacrylate units.

11. A process according to claim 9 or 10, characterised in that the amine is used in the form of a 10 or 60 wt.-% aqueous solution.

12. Clear thermoplastic plastic, containing a mix polymerisate of
1 - 15 wt.-% glutarimide units
1 - 6 wt.-% methacrylic acid units
0.5 - 10 wt.-% methacrylic acid anhydride units
and the remaining part substantially methylmethacrylate units, characterised in that it can be produced according to a process according to one or more of claims 1 to 11 and has a turbidity of less than 2% (haze value, 23° C).

13. Use of the plastic according to claim 12 in a polymer mixture with 90 to 10 wt.-% polymethylmethacrylate.

14. Use according to claim 13, wherein the polymethylmethacrylate is an impact-resistant modified polymethylmethacrylate.

## Revendications

1. Procédé de traitement de courte durée d'un produit de fusion de matière plastique avec un agent de traitement liquide à une pression et à une température auxquelles l'agent de traitement se présente à l'état liquide, selon lequel le produit de fusion de la matière plastique est placé dans une extrudeuse sous pression et est introduit dans un dispositif de mélange qui contient un stator et un rotor, et l'agent de traitement est introduit à une pression au moins équivalente dans le dispositif de mélange, dans lequel le stator sur sa face interne et le rotor sur sa face externe, possèdent en vue de l'absorption de quantités partielles définies du produit de fusion de matière plastique, des cavités qui se chevauchent pendant la rotation du rotor dans le stator pendant une brève durée, de manière qu'à la pression qui règne des fractions des quantités partielles du produit de fusion mélangé à l'agent de traitement soient séparées de chaque cavité et soient échangées entre les cavités du rotor et du stator, et que les fractions séparées respectivement débordent dans des cavités disposées davantage en aval du courant, et selon lequel le produit de fusion de matière plastique est réparti en quantités partielles définies, des quantités partielles individuelles sont mises en contact avec l'agent de traitement et en l'espace d'un temps de séjour de moins d'une seconde, sont réunies à des fractions d'au moins une autre quantité partielle, des fractions sont séparées du mélange qui s'est formé et sont réunies à une autre quantité partielle et les processus de séparation et de réunion sont répétés plusieurs fois dans des intervalles de temps de moins d'une seconde, jusqu'à formation d'un mélange intime du produit de fusion de matière plastique avec l'agent de traitement et ensuite le mélange est détendu,
caractérisé en ce que
le mélange est soumis à un dégazage sous pression réduite.

2. Procédé selon la revendication 1,
caractérisé en ce que
le courant de produit fondu qui entre dans le dispositif de mélange est soumis jusqu'à sa sortie à N^{2Y} processus de division et processus de réunion, N étant le nombre des cavités sur une rangée périphérique du rotor et du stator et Y étant le nombre de rangées de cavités dans le rotor ou le stator.

3. Procédé selon la revendication 2,
caractérisé en ce que
les produits de fusion de matière plastique sont répartis grâce à l'entrée dans les cavités dans le stator et dans le rotor, en quantités partielles de respectivement 0,05 à 10 ml.

4. Procédé selon l'une quelconque des revendications 1 à 3,
caractérisé en ce que
le rotor est mis en fonctionnement par couplage sur la vis sans fin de l'extrudeuse.

5. Procédé selon l'une quelconque des revendications 1 à 4,
caractérisé en ce que
le mélange à base de produit de fusion et d'agent de traitement est introduit après la sortie du dispositif de mélange par l'intermédiaire d'une soupape de maintien de la pression, qui conserve dans le dispositif de mélange une pression constante de 50 à 400 bars, dans une extrudeuse à dégazage et est dégazé.

6. Procédé selon l'une quelconque des revendications 1 à 5,
caractérisé en ce qu'
on utilise un agent de traitement qui est réactif vis à vis de la matière plastique.

7. Procédé selon l'une quelconque des revendications 1 à 6,
caractérisé en ce que
comme matière plastique, on façonne un polymère ayant des groupes ester d'acide carboxylique latéraux.

8. Procédé selon l'une quelconque des revendications 1 à 7,
caractérisé en ce que
l'agent de traitement renferme de l'eau.

9. Procédé selon l'une quelconque des revendications 1 à 8,
caractérisé en ce qu'
on met en oeuvre comme matière plastique du polyméthacrylate de méthyle et comme agent de traitement une amine primaire ou de l'ammoniac.

10. Procédé selon l'une quelconque des revendications 1 à 9,
caractérisé en ce qu'
on met en oeuvre l'amine en une quantité allant de 0,01 à 0,1 mol par mole de base des unités de méthacrylate de méthyle.

11. Procédé selon la revendication 9 ou la revendication 10,
caractérisé en ce qu'
on met en oeuvre l'amine sous la forme d'une solution aqueuse à 10 à 60 % en poids.

12. Matière plastique thermoplastique transparente contenant un polymérisat mixte à base de :
1-15 % en poids d'unités de glutarimide,
1-6 % en poids d'unités d'acide méthacrylique,
0,5-10 % en poids d'unités d'anhydride d'acide méthacrylique, et pour la partie restante essentiellement des unités de méthacrylate de méthyle,
caractérisée en ce qu'
elle peut être produite selon un procédé conformément à l'une ou plusieurs des revendications 1 à 11, et elle possède une opalescence (valeur Haze à 23°C) en dessous de 2 %.

13. Utilisation de la matière plastique conformément à la revendication 12, dans un mélange de polymères avec 90 à 10 % en poids de polyméthacrylate de méthyle.

14. Utilisation selon la revendication 13, dans laquelle
le polyméthacrylate de méthyle est un polyméthacrylate de méthyle modifié pour être résistant aux chocs.
